# EUROPEAN PATENT APPLICATION

(11) **EP 4 174 595 A1**
(43) Date of publication of application: **03.05.2023**
(21) Application number: 21204906.8
(22) Date of filing: 27.10.2021
(51) Int. Cl.: G05B 19/418, G06Q 50/04

(54) **SYSTEM AND METHOD FOR MONITORING MANUFACTURING OPERATIONS**

(71) Applicant: Siemens Aktiengesellschaft, 80333 München (DE)
(72) Inventor: BORRIELLO, Diego, 16043 Chiavari (IT)
(74) Representative: Siemens Patent Attorneys

(57) **Abstract**

The present invention concerns a method and system for automatically monitoring operations of a production line in function of a takt time, the method comprising:
a) receiving or acquiring (101) a takt time for the production of a product by said production line;
b) receiving or acquiring (102) a set of successive operations to be performed on said product by one or several equipment of the production line, wherein each operation is characterized by a duration defined in function of said takt time;
c) acquiring (103) in real time and from said equipment of the production line a temporal progression or evolution of each of said successive operations;
e) automatically determining (104) from said temporal progression or evolution a predicted end of at least one, preferentially of each, of said successive operations;
f) automatically determining (105) whether at least one of said predicted end exceeds an expected end of said operation;
g) in the affirmative, automatically triggering (106) or activating a measure configured for keeping the production rate equal to said takt time.

## Description

The invention relates to a method and system for monitoring manufacturing operations. More generally, the present invention relates to Manufacturing Operations Management (MOM) systems and Manufacturing Execution Systems (MES).

MOM systems can be defined as "a functional layer of information technology that links business planning and shop floor control systems to deliver to manufacturing an achievable and realistic production plan". While Manufacturing Execution Systems (MES) is mainly focused on the "Production" pillar, MOM is intended to have a broader support of all four categories defined in ISA95, namely Production, Maintenance, Quality, and Inventory.

A typical MOM system consists of a set of applications that must be integrated and coordinated to provide a complete set of MOM functionalities that are required for the target industry. In this context, workflows are generally used to model and execute plant and business processes, leading to better coordination between people, applications, and processes. In particular, MES processes can be very well described through workflows, i.e. diagrams that represent with a precise graphic syntax the set of actions that must be carried out and the relationships between them (e.g. action "A" must precede action "B", action "A" can follow action "B" or action "C", etc.).

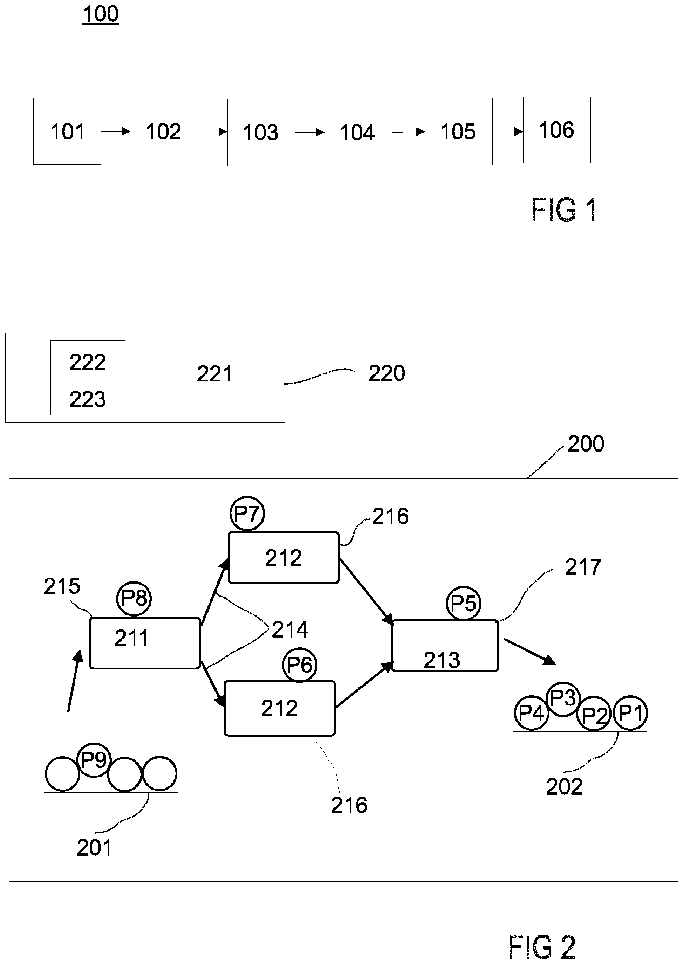

According to current techniques, a MES operator in charge of a production line can visualize operations (e.g. tasks, or jobs, or steps, or action, etc., depending on the used terminology for describing said operations) that have to be performed via a Graphical User Interface (GUI). The latter provides a "flat visualization" of said operations that must be executed and validated, using for instance a grid or tile as shown in Figure 1 for representing said operations, wherein for each operation, an expected starting time and end time are provided, as well as a status of the operation.

Unfortunately, the current techniques for visualizing and managing said operations are not efficient for taking into account the takt time of the production. For a production line configured for producing product units for a customer, the takt time can be defined as the average time between the production of two successive units (which is actually usually equal to the average time between the start of the very first operation performed by the first equipment of a production line on an object received as input, and the start of said very first operation performed by the first equipment on the directly next object received as input, wherein the desired product is obtained after carrying out all operations of the production line on said object, the desired product being outputted by the last equipment of the production line), wherein the production rate (i.e. number of units that are produced per unit of time, e.g. per hour or day or week) is set to match a rate fixed by the customer demand. The takt time reflects the rate of production of the production line to match the demand. The takt time is should ideally match the customer demand, that is the production line shall have the capacity to satisfy this production rate. The takt time defined for the production line will define or set the takt time of each of its equipment. For instance, if a production line comprises 3 machines installed one after another according to a chain, wherein a product passes successively through each machine from the first one to the last one, being received as input and outputted with some transformation, and wherein the operation performed by each machine on said product received in input lasts for 2 hours, then if a product enters the first machine at time T0, then it will left the last machine at time T0 + 6h, that is, the total operations carried out on said product took 6 hours, however, each 2 hours a new product enters the first machine, and thus the takt time of the production line is 2 hours. The takt time can be thus defined as the number of products (or product units) produced by the production line (i.e. as output) per time unit. This takt time is very important for tracking the production status with respect to the delivery requirements. Unfortunately, there is, up to now, no contextualization of said takt time.

Therefore, there is still a need for a system and method that enable a more efficient managing of production line operations wherein takt time requirements are taken into account.

An objective of the present invention is therefore to provide a method and a system that provide an improved management of production line operations with respect to said takt time.

This objective is achieved according to the present invention by a method, preferentially a computer-implemented method, and a system for monitoring production line operations according to the object of the independent claims. Dependent claims present further advantages of the invention.

The present invention proposes indeed a method for automatically monitoring operations of a production line in function of a takt time, the method comprising the following steps:
a) receiving or acquiring a takt time for the production of a product by said production line;
b) receiving or acquiring a set of successive operations to be performed on said product by one or several equipment of the production line, wherein each operation is characterized by a duration defined in function of the takt time. In particular, the total duration (i.e. the sum of the durations) of all operations performed by a same equipment is defined in function of said takt time, and is preferentially equal to said takt time. Preferentially, the system according to the invention automatically sets the duration of each operation performed by and/or in connection with an equipment of the production line in function of set takt time or of at least part of said operations;
c) acquiring in real time and from said one or several equipment of the production line, a temporal progression or evolution of each of said successive operations;
d) automatically determining from said temporal progression or evolution a predicted end of at least one, preferentially of each, of said successive operations for said one or several equipment;
e) automatically determining whether at least one of said predicted end exceeds an expected end of said operation;
f) in the affirmative, automatically triggering or activating a measure aiming to reduce a temporal difference between the predicted end and the expected end. Said measure can be configured for instance for keeping the production rate equal to said takt time.

In particular, said measure is automatically triggered or activated when a temporal difference between the predicted end of the operation and the expected end is greater that a predefined temporal threshold. Said measure can comprise for instance
- automatically generating and/or displaying an alarm; and/or
- automatically adapting, e.g. increasing, a production speed of one of said equipment in order to keep the production rate equal to said takt time; and/or
- automatically modifying a scheduled production plan of the production line for increasing the production rate of the production line.

Preferentially, the method comprises displaying on a graphical user interface (GUI), a takt time bar whose width is configured for representing said takt time for one of said production line equipment, e.g. a machine, of the production line, and parallel to said takt time bar, one or several operation bars, wherein each operation bar represents an operation to be performed on said product by said equipment, a succession of operation bars representing thus the temporal succession of operations to be performed by the equipment on said product, and wherein the width of each operation bar shows the duration of the operation, each extremity of each operation bar being aligned with a temporal value comprised within said takt time bar, namely one of said extremities being aligned with a first temporal value indicating an expected start of the operation and the other extremity being aligned with a second temporal value indicating said expected end of the operation with respect to said takt time, wherein the takt time bar is configured for indicating in real time, e.g. with a cursor, said temporal progression of each of said successive operations that the equipment has to perform. Said display may further comprise a global takt time bar, which is made of a succession of said takt time bars representing the successive equipment through which an equipment will pass, each takt time bar being associated to one or several operation bars representing, each, an operation to be performed by the concerned equipment, the global takt time bar offering a global view of the current production processes, e.g. whether on time or delayed, of the whole equipment of the production line.

The objective of the present invention is also solved by a system, e.g. a computing system, configured for automatically monitoring operations of a production line in function of a takt time, the system comprising:
- a graphical user interface (GUI) (211) comprising a display area and a user interaction area;
- a processing unit (210) configured for acquiring and processing data from equipment of said production line;
- a memory;
wherein said processing unit is characterized in that it is configured for performing the steps of the previously described method.

In particular, the system might be configured for automatically displaying an alarm on said GUI when the temporal difference between the predicted end of the operation and its expected end is greater that said predefined temporal threshold.

Finally, the present invention concerns also a non-transitory machine-readable medium storing instructions executable by a processing unit to cause a computing system to perform the steps of the claimed method.

Preferred but not exclusive embodiments of the invention will now be described with reference to the accompanying drawings, which depict in:
- Figure 1: schematically a preferred embodiment of the method according to the invention;
- Figure 2: schematically a system for automatically monitoring operations of a production line according to the invention;
- Figure 3: a preferred embodiment of a GUI according to the invention.

The present invention lays in the technical field of manufacturing execution systems (MES/MOM). Figure 1 schematically describes the steps of the method according to the invention and Figure 2 provides a preferred embodiment of a system 220 for automatically monitoring operations 211, 212, 213, of a production line 200 according to the invention.

In the very schematic presentation of the invention illustrated by Fig. 2, the system 220 according to the invention is typically a computing system comprising a processing unit 222, a memory 223, and a GUI 221. The processing unit 222 may comprise one or several processors. The GUI is notably configured for enabling a user to control and/or activate one or several operations or actions of the production line 200. The system 220 is connected to the production line 200 for acquiring and/or sending data or message, like control command, related to the operations of the production line and/or the production of products Pᵢ, i=1, ..., n, with n being the number of product units to be produced by the production line 200. For this purpose, the system 220 might be connected to one or several of the equipment 215, 216, 217, of the production line, each equipment being configured for performing one or several operations 211, 212, 213. As illustrated in Fig. 2, two equipment 212 might work in parallel. Products Pᵢ pass for instance successively from one equipment to another one, as schematically illustrated by the arrows in Fig. 2. A set of products (or objects) on which the set of operations 211-213 has to be carried out is typically provided in input 201 of the production line 200, each operation modifying for instance the shape or a part of the product (or object), e.g. adding a feature to the product (or object), and at the output 202 of said production line 200, the modified products (or modified object which corresponds to the desired product) are collected. Of course, the production line of Fig. 2 is only provided for illustration purpose, and the system 220 according to the invention is thus not limited to the monitoring and/or controlling of this specific production line 200.

Each operation 211-213 is characterized by a duration which depends on the operation to perform and on the equipment characteristics. For instance, the duration of operation 211 by equipment 215 on each product Pi might be 1 hour, the duration of operation 212 by each of the equipment 216 might be 2 hours, and the duration of operation 213 by equipment 217 might be 1 hours. The production line might comprise additional operations, for instance a quality control operation and a cleaning operation might both start simultaneously after operation 213, the first one having a duration of 2 hours and the second one of 1 hours. Equipment 216 are installed in parallel after equipment 215 in order to not decrease the output rate of equipment 215. Indeed, each 2 hours, equipment 215 outputs a product modified according to operation 211, and the outputted products are then distributed alternately to one of the equipment 216, i.e. if a first outputted product of equipment 215 is provided as input to one of the equipment 216, the next product outputted by equipment 215 will be provided as input to the other equipment 216. By this way, the production rate is not impacted by the lower production rate of equipment 216 which results from the operation 212 lasting temporally longer compared to the other operations 211 and 213. Preferentially, the duration of an operation that is automatic and whose duration is flexible, i.e. can be increased or decreased within a predefined time gap and notably without decreasing the quality of said operation, might be automatically determined by the system according to the invention in order to match the takt time.

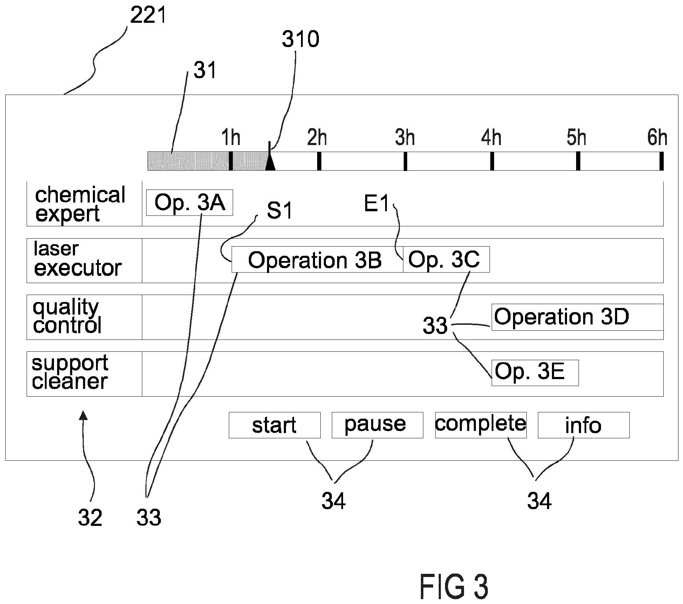

A preferred embodiment of the GUI 221 according to the invention is illustrated in more details in Fig. 3. It comprises a takt time bar 31 showing the takt time for a machine or equipment of the production line, a set of operation bars 33 showing the successive operations (e.g. operation 3A, operation 3B, operation 3C, operation 3D, operation 3E) that are performed by said machine or equipment on the product or object received as input by said equipment or machine, optionally, for each operation, a required skill or profile 32, and optionally, one or several virtual action buttons 34 for automatically triggering predefined actions with respect to the display and/or the production line, notably said equipment. The takt time bar is preferentially subdivided in time units. E.g. if the takt time of the considered machine is 6h, then the temporal subunit might be 1hour as shown in Fig. 3.The operation bars 33 are parallel to the takt time bar 31. Preferentially, operations bars representing operations that require a same skill or profile are grouped in a same line parallel to the takt time bar 31 and ordered according to the temporal succession of the operations they represent, from the temporally earliest operation to the latest one. The width of each operation bar 33 shows the duration of the concerned operation with respect to the takt time defined for the equipment or machine, each extremity of each operation bar 33 being aligned with a temporal value comprised within said takt time bar 31, namely one of said extremities being aligned with a first temporal value indicating an expected start S1 of the operation and the other extremity being aligned with a second temporal value indicating said expected end E1 of the operation with respect to said takt time. Preferentially, the operation bar 33 of the first operation performed by the equipment or machine, e.g. operation 3A according to Fig. 3, has its extremity representing the start of said first operation aligned with one of the extremities of the takt time bar (i.e. start of the takt time), and the operation bar corresponding to the last operation performed by the machine or equipment has its extremity corresponding to the end of said last operation aligned with the other extremity of the takt time bar (i.e. end of the takt time). Preferentially, the takt time bar 31 is configured for indicating in real time, for instance with a cursor 310, said temporal progression of each of said successive operations, enabling thus an operator to rapidly check the evolution of the production with respect to the defined takt time.

The system 220 might be connected, via its processing unit 222, to a MES system of a production site comprising the production line 200, or might be part of said MES system. Said production site may comprise additional production lines which can be monitored and/or controlled by the system 220 according to the invention. The MES is configured for managing the production of one or several products by means of one or several production lines of the production site.

Turning back to Figure 1, the latter illustrates in more details a preferred embodiment of the method according to the invention, which will now be described in connection with Figure 2:
At step 101, the system 220 according to the invention receives or acquires a takt time for the production of a product Pi by the production line 200. The takt time might be provided by an operator, e.g. through the GUI 221, or might be acquired from a database of the MES. The takt time defines the number of product units that has to be produced by unit of time, e.g. x products per day, or y products Pi per week. Non transformed products or objects, i.e. raw products or objects, are received in input 201 of the production line 200, the latter being configured for performing a set of successive operations 211-213 on said raw product or object in order to produce a final product whose rate of production shall be equal to said takt time.

For this purpose, the system 220 automatically receives or acquires, at step 102, information about the set of successive operations 211-213 that have to be performed on said raw product or object in order to create said final product. Said operations are performed by said one or several equipment 215, 216, 217 of the production line 200. Each equipment 215, 216, 217 might perform one or several operations on a product/object received as input and outputs a "transformed" or "modified" product that will be received as input by the next equipment, until the last equipment of the production line outputs the final product. Said information comprises notably at least the duration of each operation and/or data (e.g. a temporal gap within which said duration can be set up) enabling the system to automatically set up the duration of one or several operations, and, optionally, the type of operation, and/or, a skill or profile required for performing said operation. According to the present invention, the duration of each operation is defined in function of the takt time, as shown in Figure 3. This enables the system to automatically determine whether there will be a delay with respect to the defined and required takt time. In particular, the system might receive or acquire, for each operation, a set of successive steps that have to be performed and an average time for executing each of said successive steps in order to complete the operation.

At step 103, the system 220 automatically acquires from said equipment and in real time, a temporal progression or evolution of said successive operations. In particular, it can acquire, for each equipment, data related to the temporal progression of the operation that is currently performed by the equipment, knowing from said data whether the current operation lasts already for instance for 35 minutes, while its duration is for instance 1 hour. Said temporal evolution or progression of the operation is for instance configured for enabling the system to determine when the operation started and for how much time it has been active. For instance, the system 220 acquires from each equipment in real time the status, active or inactive, of each of its operations, preferentially in function of the time. Preferentially, for each operation executed by an equipment, the system is configured for acquiring or receiving information about the current step of the operation that is executed by the equipment, and the starting time of said current step, its current duration and/or whether it is still active or not.

At step 104, the system automatically determines from said temporal progression or evolution a predicted end of at least one, preferentially of each, of said successive operations. For instance, knowing the step of the operation that is currently performed by an equipment, the current duration of this step and its average duration, the system may automatically determine a predicted end of the operation. According to another embodiment, the system may use artificial intelligence for predicting the end of the operation or of all remaining operations. For instance, and as illustrated in Fig. 3, the system may acquire the effective starting time of the operation 3B, its current duration as shown by the cursor 310, and determines its predicted end from the duration of each remaining steps of the operation 3B that have to be executed for completing operation 3B.

At step 105, the system 220 automatically determines whether at least one of said predicted ends exceeds an expected end of at least one of said operations. For this purpose, it can be configured for automatically comparing the expected end to the predicted end and determining their difference. In particular, it can compare said difference to a predefined temporal threshold, wherein such a threshold might be predefined for each operation and acquired by the system according to the invention, for instance from a database of a MES system.

At step 106, if required (i.e. if at least one of said predicted ends of an operation exceeds its expected end) the system 220 automatically triggers or activates a measure aiming to reduce the temporal difference between the predicted end and the expected end. Preferentially, said measure is automatically triggered or activated when the temporal difference between the predicted end of the operation and the expected end is greater than said predefined temporal threshold.

Said measure may comprise for instance sending an alarm signal to a control system and/or to an operator and/or displaying an alarm on the GUI 221, and/or automatically adapting a production speed of one of said equipment 215, 216, 217, for instance in order to increase its takt time in order to keep the average production rate equal to the takt time defined for the production line, and/or automatically modifying a scheduled production plan of the production line 200 for increasing the production rate of the production line 200. Said measure preferentially triggers one or several actions implemented by one or several equipment of the production line. Advantageously, according to the present invention, the measure can take place at a very early stage, i.e. as soon as a difference between an expected and predicted end is identified as being relevant (i.e. the difference is e.g. greater than said predefined threshold) which results in a minimization of the actions that have to be implemented for reducing said temporal difference.

In conclusion, the present invention advantageously provides a system and method capable of contextualizing the production operations with a takt time required for a production line, enabling to identify at an early stage any if appropriate measures are required for maintaining and keeping said takt time.

## Claims

1. Method for automatically monitoring operations (211-213) of a production line (200) in function of a takt time, the method comprising the following steps:
a) receiving or acquiring (101) a takt time for the production of a product (P1,...,P9) by said production line (200);
b) receiving or acquiring (102) a set of successive operations (211-213) to be performed on said product by one or several equipment (215, 216, 217) of the production line (200), wherein each operation (211-213) is **characterized by** a duration defined in function of said takt time;
c) acquiring (103) in real time and from said one or several equipment (215, 216, 217) of the production line (200), a temporal progression or evolution of said successive operations (211-213);
d) automatically determining (104) from said temporal progression or evolution a predicted end of at least one, preferentially of each, of said successive operations (211-213);
e) automatically determining (105) whether at least one of said predicted ends exceeds an expected end of said operation (211-213);
f) in the affirmative, automatically triggering (106) or activating a measure aiming to reduce a temporal difference between the predicted end and the expected end.

2. The method according to claim 1, wherein said measure is automatically triggered or activated when a temporal difference between the predicted end of the operation and the expected end is greater than a predefined temporal threshold.

3. The method according to claim 1 or 2, wherein said measure comprises:
- automatically generating and/or displaying an alarm; and/or
- automatically adapting a production speed of one of said equipment (215, 216, 217) in order to keep the production rate equal to said takt time; and/or
- automatically modifying a scheduled production plan of the production line (200) for increasing the production rate of the production line (200).

4. The method according to one of the claims 1 to 3, comprising displaying on a graphical user interface (GUI) (221), a takt time bar whose width is configured for representing said takt time for one of the equipment of the production line, and parallel to said takt time bar, a set of operation bars, wherein each operation bar represents one of the successive operations to be performed on said product by said equipment, and wherein the width of each operation bar shows said duration of the operation, each extremity of each operation bar being aligned with a temporal value comprised within said takt time bar, namely one of said extremities being aligned with a first temporal value indicating an expected start of the operation and the other extremity being aligned with a second temporal value indicating said expected end of the operation with respect to said takt time for the concerned equipment, wherein the takt time bar is configured for indicating in real time, e.g. with a cursor, said temporal progression of each of said successive operations.

5. The method according to claim 1-4, wherein acquiring or receiving a set of operations comprises receiving or acquiring for each operation, a set of steps that have to be performed for completing said operation and an average duration of each step.

6. A system (220) configured for automatically monitoring operations (211-213) of a production line (200) in function of a takt time, said system (220) comprising:
- a graphical user interface (GUI) (221) comprising a display area and a user interaction area;
- a processing unit (222) configured for acquiring and processing data from equipment of said production line;
- a memory (223);
wherein said processing unit (222) is **characterized in that** it is configured for performing the steps of the method according to any of the claim 1-5.

7. System (220) according to claim 6, wherein the GUI (221) is configured for displaying a takt time bar whose width is configured for representing said takt time for one of the equipment of the production line, and parallel to said takt time bar, a set of operation bars, wherein each operation bar represents one of the successive operations to be performed on said product by said equipment, and wherein the width of each operation bar shows said duration of the operation, each extremity of each operation bar being aligned with a temporal value comprised within said takt time bar, namely one of said extremities being aligned with a first temporal value indicating an expected start of the operation and the other extremity being aligned with a second temporal value indicating said expected end of the operation with respect to said takt time for the concerned equipment, wherein the takt time bar is configured for indicating in real time, e.g. with a cursor, said temporal progression of each of said successive operations.

8. System (220) according to claim 7, comprising automatically displaying an alarm on said GUI (221) when a temporal difference between the predicted end of the operation and the expected end is greater than a predefined temporal threshold.

9. A non-transitory machine-readable medium storing instructions executable by a processing unit (222) to cause a computing system to:
a) receive or acquire (101) a takt time for the production of a product by a production line (200);
b) receive or acquire (102) a set of successive operations (211-213) to be performed on said product by an equipment (215, 216, 217) of the production line (200), wherein each operation is **characterized by** a duration defined in function of said takt time;
c) acquire, in real time and from said equipment (215, 216, 217) of the production line (200), a temporal progression or evolution of each of said successive operations;
d) automatically determine (104) from said temporal progression or evolution a predicted end of at least one, preferentially of each, of said successive operations;
e) automatically determine (105) whether at least one of said predicted ends exceeds an expected end of said operation (211-213) ;
f) in the affirmative, automatically trigger (106) or activate a measure aiming to reduce a temporal difference between the predicted end and the expected end, e.g. configured for keeping the production rate equal to said takt time.

10. Non-transitory machine-readable medium according to claim 9, wherein said instructions executable by a processing unit (222) are configured for causing a computing system to display on a graphical user interface (GUI) (221), a takt time bar whose width is configured for representing said takt time, and parallel to said takt time bar, a set of operation bars, wherein each operation bar represents one of said successive operations to be performed on said product, and wherein the width of each operation bar shows said duration of the operation, each extremity of each operation bar being aligned with a temporal value comprised within said takt time bar, namely one said extremities being aligned with a first temporal value indicating an expected start of the operation and the other extremity being aligned with a second temporal value indicating an expected end of the operation with respect to said takt time, wherein the takt time bar is configured for indicating in real time, said temporal progression of each of said successive operations.
